# EUROPEAN PATENT SPECIFICATION

(11) **EP 0 919 022 B1**
(45) Date of publication and mention of the grant of the patent: **02.05.2003**
(21) Application number: 97915771.6
(22) Date of filing: 07.02.1997
(51) Int. Cl.: G06F 3/033, G06K 11/18

(54) **DEVICE FOR OPERATING A MOUSE-OPERATED COMPUTER PROGRAM**
VORRICHTUNG ZUM BETRIEB EINES MAUS-GESTEUERTEN PROGRAMMS
DISPOSITIF DE COMMANDE D'UN PROGRAMME D'ORDINATEUR FONCTIONNANT A L'AIDE D'UNE SOURIS

(30) Priority: 01.08.1996 WO PCT/NO96/00197
(43) Date of publication of application: 02.06.1999
(73) Proprietor: Krog, Wergeland Gabriel, 1800 Askim (NO)
(72) Inventor: Krog, Wergeland Gabriel, 1800 Askim (NO)
(74) Representative: Holme, Edvard
(86) International application number: NO9700038
(87) International publication number: WO98006026

(56) References cited:
- DOS, Volume 10, 1994, "PC-Stylus-die bessere Maus", page 17.

## Description

The present invention relates to a device for operating a mouse-operated computer program as disclosed in the preamble of claim 1.

When operating a mouse-operated computer program it has hitherto been usual to use a flat object having push buttons for operation and a roller on the underside which controls the mouse pointer.

Such a mouse is e.g. known from the journal DOS vol.10, 1994; page 17 which is related to a "fully hand-held pen-like" PC mouse having a mouse tracker ball to be controlled by a finger on the hand, and control buttons having same functionality as on a conventional mouse which is movable on a tabletop. Such a device must be held off the table.

From EP 0 782 093 A is known a mouse adapted to interface with data processing means, such as e.g. a personal computer. The mouse includes a first part and a second part, which is provided essentially perpendicular to said first part. A lower surface of said first part includes movement sensing means as they are well known in the art. The second part is such shaped that it is adapted to a person's hand and as it is well known form the design of joysticks. These mouse-like articles have been given an ergometric shape so that they fit well in the hand, but during use the hand must of course be twisted from the natural position of rest, which causes constant tension in the elbow area. The use of such mice has been found to cause inflammation and pain in the arm when used over a long period of time. In order to avoid these static positions it has been recommended that the mouse should be used in different positions, and different types of underlying surfaces have been made which are supposed to give a better working posture, but none of these have proven to be satisfactory.

In order to overcome some of these drawbacks a so-called mouse pen has been developed, but this has not been found to give the desired result either with regard to a normal working posture which does not cause tension in the arm.

The objective of the present invention is to obviate the aforementioned problems of chronic pains and the inconveniences these entail. This is done by means of a device for operating mouse-operated computer programs, the characteristic features of which are disclosed in claim 1. Additional features of the invention are disclosed in the remaining dependent claims.

By means of the device according to the claims there is provided a possibility of being able to work with mouse-operated computer programs without any anxiety about muscular tension and other pain since the hand will be in a normal position of rest without any twists of the arm, and the weight of the arm can rest fully on the device.

Since buttons are located at different points the user will be able to change fingers when operating icons or similar in the computer program. In this way, static use of the fingers is also avoided, and thus any muscular tension which might result in chronic conditions will, in a simple manner, be avoided.

The provision on the underside of the mouse of contact points in the form of rolling balls or sliding surfaces enables the device to be operated with ease of movement on the mouse pad in such a way that no extra strength will be necessary in order to move the mouse pointer on the screen. This means that the weight of the arm can rest on the device and that the usual small lift of the arm with subsequent muscular tension will disappear.

The invention will be described in more detail below with reference to the drawings, wherein:
- Fig. 1: is a perspective view of the device for operating a mouse-operated computer program.
- Fig. 2: is a view of the device in Fig. 1 from the underside.
- Figs. 3a,b: are schematic illustrations of the angles of the projecting part relative to the base seen from the side and from behind, respectively.

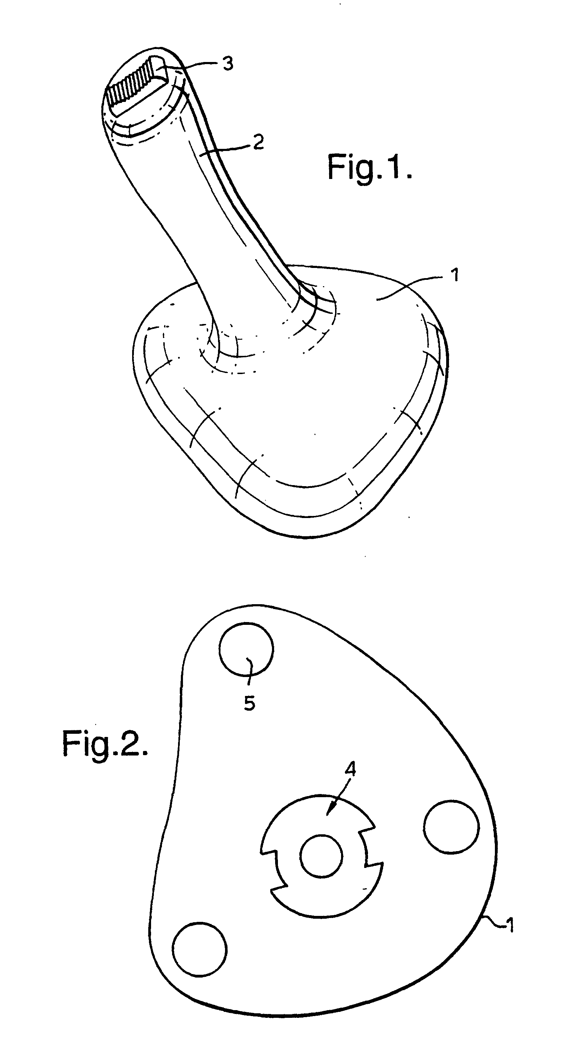

Fig. 1 illustrates the device for operating mouse-operated computer programs, said device consisting of a base 1 with an upwardly projecting handle 2 secured thereto. On the top of the handle 2 there is provided a mouse-operating means in the form of, e.g., a toggle key 3, or also in the form of separate push buttons which can be operated by the user's thumb. However, the operating means 3 may be of any previously known embodiment of switches capable of actuating the mouse pointer in a computer program. Several operating means can also be provided on the handle and/or on the actual base which can be reached by the user's various fingers in order thus to obtain relief.

On the perspective drawing the base 1 and the handle 2 are made in one piece.
However, it will also be possible to make the handle so that it is linked to the base by means of link devices that are known per se, and can in a simple manner be secured in the desired position relative to the base. This is so because the device illustrated in Fig. 1 is intended for the average user, but there are also people who have certain twists relative to the normal plane as a result of previous fractures of the arm or other causes, and in this case the user will then be able to adjust the handle relative to the base to his particular normal position of the arm.

In the same way, it will also be possible for left-handed people to adjust the device for left-handed use as the handle 2 has a small tilt towards the left of the figure relative to the base plane, which will not be particularly convenient for a left-handed person.

What is essential is that the handle 2 is fixed relative to the base 1 during use, and that when the user grips around the handle 2, the wrist and the arm will be in the position in which there can occur no unnatural twists of the arm which may cause tension.

In Fig. 2 the base 1 is shown seen from the underside. In the illustrated basic example the base is triangular in shape, but it will of course be possible to have a base of any other shape, the essential being that there is an operating ball 4 or similar which, during movement of the base 1 against the underlying surface, emits control signals to the mouse pointer on the screen. In the illustrated embodiment in Fig. 2, three balls 5 are provided which roll on the underlying surface during movement, the operating means 4 for the mouse pointer having a distance from any mouse pad relative to the balls so that it is in contact with the signal emitting means in the base. The balls 5 cause the device to roll without any significant resistance on the underlying surface, which in turn is instrumental in ensuring that the user does not strain himself too much. Sliding means that are known per se in the form of plastic elevations, or other suitable means which cause little friction, can of course also be used instead of balls 5. In the illustrated example, three contact points are provided, but it is of course also possible to provide more or fewer, although the three point device has been found to be particularly suitable. It will also be possible to make the whole base 1 in the form of a sliding surface.

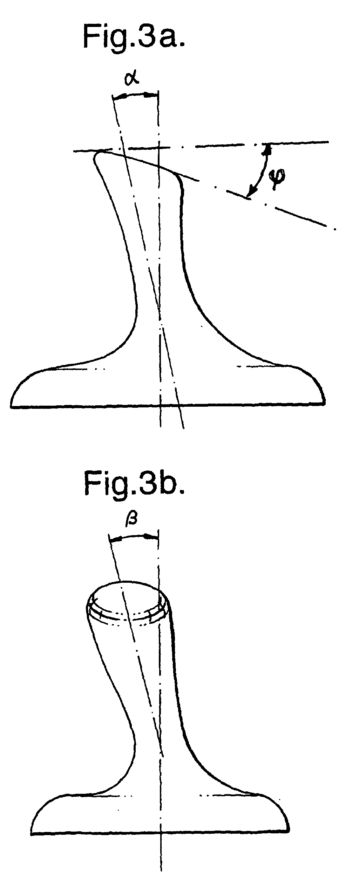

It has been proven that the most favourable tilt seen from the side is at an angle α of between 5 and 45 degrees, prefered 23 degrees, relative to a vertical line through the base, cf. Fig. 3a, and seen from behind, cf. Fig. 3b, an angle β of between 5 and 45 degrees, prefered 10 degrees, relative to a vertical line through the base.

The figures relate to a right-handed mouse, in a left-handed mouse the same angles will apply, but then in the opposite direction with reference to Fig. 3b.

Fig. 3a illustrates, seen form the side, also an angle ϕ of between 0 and 60 degrees at the top of the handle 2 relative to the horisontale plane. The angle ϕ is prefered to be 20 degrees.

## Claims

1. A device for operating a mouse-operated computer program, the device being provided with an operating means, at least one operating roller ball means (4) on the underside of a base (1) for providing movement signals to a mouse pointer on a computer display, and sliding means (5) provided on the underside of the base (1), **characterised in, that** the base (1) has from a fraction of its surface area an upwardly extending handle (2) secured thereto, any cross section of said handle substantially parallel to said base surface area being substantially smaller than said surface area of said base, enabling fingers of a gripping hand to grip around the handle (2), and said handle (2) on its top face having toggle key means (3) for operation by the thumb of said gripping hand, said handle (2) in a side view tilting in a forward direction, thereby forming an angle (α) of between 5 and 45 degrees relative to a vertical line through the base (1), said handle in a rear view forming an angle (β) of between 5 and 45 degrees relative to a vertical line through the base (1), said top face forming an angle (ϕ) with a horizontal plane of between 0 and 60 degrees.

2. A device according to claim 1, **characterised in, that** at least one operating means is provided on one of the sides of the handle (2) in addition to said toggle key means (3) on said top face.

3. A device according to claim 1 **characterised in, that** the sliding means is a plurality of rotatable balls (5).

4. A device according to claim 1, **characterised in, that** said angle (α) is 23 degrees.

5. A device according to claim 1, **characterised in that** said angle (β) is 10 degrees.

6. A device according to claim 1, **characterised in, that** said angle (ϕ) is 20 degrees.

7. A device according to claim 1, **characterised in, that** said angle (α) is 23 degrees, said angle (β) is 10 degrees said angle (ϕ) is 20 degrees.

## Patentansprüche

1. Vorrichtung zum Betrieb eines mausgesteuerten Computerprogramms, wobei die Vorrichtung mit einer Bedieneinrichtung, wenigstens einem Bedien-Rollkugel-Mittel zur Erzeugung von Bewegungssignalen an einem Mauszeiger auf einem Computerbildschirm an der Unterseite eines Basisabschnitts (1) versehen ist, und mit Gleitmitteln (5), die an der Unterseite des Basisabschnitts (1) vorgesehen sind, **dadurch gekennzeichnet, dass** der Basisabschnitt (1) einen nach oben von einem Teil seiner Oberfläche vorstehenden Griff (2) besitzt, jeder Querschnitt des Griffs im wesentlichen parallel zu Basisoberfläche wesentlich kleiner als diese Basisoberfläche ist, so dass Fingern einer Greifhand ermöglicht wird, um den Griff (2) zu greifen, und wobei der Griff (2) auf seiner Oberseite Kipptastermittel (3) zur Betätigung durch den Daumen der Greifhand besitzt, wobei der Griff (2) in seitlicher Ansicht nach vorn geneigt ist, wodurch ein Winkel (α) zwischen 5 und 45 ° relativ zu einer Vertikallinie durch den Basisabschnitt (1) gebildet wird, wobei der Handgriff in rückwärtiger Ansicht einen Winkel (β) zwischen 5 und 45 ° relativ zu einer Vertikallinie durch den Basisabschnitt (1) ausbildet, wobei die Oberfläche einen Winkel (ϕ) zu einer horizontalen Ebene zwischen 0 und 60 ° bildet.

2. Einrichtung nach Anspruch 1, **dadurch gekennzeichnet, dass** wenigstens eine Bedieneinrichtung an einer der Seiten des Griffs (2) zusätzlich zu den Kipptastermitteln (2) auf der Oberseite vorgesehen ist.

3. Einrichtung nach Anspruch 1, **dadurch gekennzeichnet, dass** die Gleitmittel in einer Vielzahl von drehbaren Kugeln (5) bestehen.

4. Einrichtung nach Anspruch 1, **dadurch gekennzeichnet, dass** der Winkel (α) 23 ° beträgt.

5. Einrichtung nach Anspruch 1, **dadurch gekennzeichnet, dass** der Winkel (β) 10 ° beträgt.

6. Einrichtung nach Anspruch 1, **dadurch gekennzeichnet, dass** der Winkel (ϕ) 20 ° beträgt.

7. Einrichtung nach Anspruch 1, **dadurch gekennzeichnet, dass** der Winkel (α) 23 ° beträgt, der Winkel (β) 10 ° beträgt, der Winkel (ϕ) 20 ° beträgt.

## Revendications

1. Dispositif pour exécuter un programme d'ordinateur à l'aide d'une souris, le dispositif comportant au moins un moyen de fonctionnement à boule roulante (4) placé sur le dessous de la base (1) pour fournir des signaux de mouvement à un pointeur de souris sur un écran d'ordinateur, et un moyen de glissement (5) placé sur le dessous de la base (1), **caractérisé en ce que** la base (1) comporte sur une partie de sa surface une poignée dirigée vers le haut (2) fixée à celle-ci , toute section transversale de ladite poignée sensiblement parallèle à ladite surface de base étant sensiblement plus petite que ladite surface de ladite base, permettant de saisir avec les doigts d'une main la poignée (2), et ladite poignée (2) comportant sur sa face supérieure un moyen de touche à bascule (3) qui peut être actionnée avec le pouce de ladite main qui saisit, ladite poignée (2) s'inclinant vers l'avant en vue de côté, ce par quoi la poignée forme un angle ( α ) compris entre 5 et 45 degrés par rapport à une ligne verticale passant par la base (1), ladite poignée formant, en vue arrière, un angle ( β ) compris entre 5 et 45 degrés par rapport à un ligne verticale passant par la base (1), ladite face supérieure formant un angle ( ϕ ) avec un plan horizontal compris entre 0 et 60 degrés.

2. Dispositif selon la revendication 1, **caractérisé en ce qu'**il comporte au moins un moyen de fonctionnement sur un des côtés de la poignée (2) en plus dudit moyen de touche à bascule (3) installé sur ladite face supérieure.

3. Dispositif selon la revendication 1, **caractérisé en ce que** le moyen de glissement est constitué d'une pluralité de billes rotatives (5).

4. Dispositif selon la revendication 1, **caractérisé en ce que** ledit angle ( α ) est égal à 23 degrés.

5. Dispositif selon la revendication 1, **caractérisé en ce que** ledit angle ( β ) est égal à 10 degrés.

6. Dispositif selon la revendication 1, **caractérisé en ce que** ledit angle (ϕ) est égal à 20 degrés.

7. Dispositif selon la revendication 1, **caractérisé en ce que** ledit angle ( α ) est égal à 23 degrés, ledit angle ( β ) est égal à 10 degrés et ledit angle ( ϕ ) est égal à 20 degrés.
